# EUROPÄISCHE PATENTSCHRIFT

(11) **EP 2 796 014 B1**
(45) Veröffentlichungstag und Bekanntmachung des Hinweises auf die Patenterteilung: **18.05.2016**
(21) Anmeldenummer: 11824271.8
(22) Anmeldetag: 21.12.2011
(51) Int. Cl.: H05H 3/06, F15B 3/00, G21B 3/00

(54) **VORRICHTUNG ZUR GEWINNUNG MONOCHROMATISCHER NEUTRONENSTRAHLUNG**
DEVICE FOR OBTAINING MONOCHROMATIC NEUTRON RADIATION
DISPOSITIF DE PRODUCTION D'UN RAYONNEMENT NEUTRONIQUE MONOCHROMATIQUE

(43) Veröffentlichungstag der Anmeldung: 29.10.2014
(73) Patentinhaber: Potemkin, Alexander, 22885 Barsbüttel (DE)
(72) Erfinder: Potemkin, Alexander, 22885 Barsbüttel (DE)
(74) Vertreter: Säger, Manfred
(86) Internationale Anmeldenummer: PCT/IB2011/003219
(87) Internationale Veröffentlichungsnummer: WO 2013/011349

(56) Entgegenhaltungen:
- WO-A1-2004/048786
- WO-A2-2009/070043
- US-A- 4 530 734
- US-A1- 2006 198 486
- A.N. Kraiko: "Time-Dependent Compression of Cylindrical or Spherical Ideal Gas Volumes", AIP Conference Proceedings , Bd. 849 Issue 1 August 2006 (2006-08), Seiten 74-81, XP002682676, ISSN: 0094-243X, DOI: 10.1063/1.2337179 Gefunden im Internet: URL:http://connection.ebscohost.com/c/arti cles/22114264/time-dependent-compression-c ylindrical-spherical-ideal-gas-volumes [gefunden am 2012-08-30]

## Beschreibung

Quellen optischer (Photonen-) Strahlung sind bekannt (Laser auf der Basis von Monokristallen aus Rubin, Fianit (Zirkoniumdioxid) o. a. und Maser auf der Basis adiabatisch expandierten, überhitzten Gases), doch ist auf Grund der starken Absorption dieser Strahlung in dichten Medien ihre Verwendung auf die Behandlung von Materialien aus nächster Entfernung zwecks Zerstörung oder Oberflächenbearbeitung beschränkt. Versuche, stärkere Quellen zu schaffen, um die Strahlung über eine grössere Entfernung wirken zu lassen, scheitern an der starken Erhöhung der Ausgangsleistung, der Umsetzung der Fokussiervorgänge usw. Schon ziemlich lange arbeiten einige Forscher an der Entwicklung von Röntgenlasern auf der Basis isotopischer Gammastrahlungsquellen (Kobalt 60) bzw. nach dem Prinzip der Röntgenquellen. Offensichtlich ist der Vorteil von Röntgen- und Gammaquellen gegenüber optischen monochromen Quellen: Ihre kurzwellige Strahlung durchdringt dichte Materialien, weshalb sie heute breite Anwendung in der Defektoskopie von Stahlteilen mit einer Wandstärke von 150 - 250 mm findet. Allerdings ist dies sehr energieaufwendig (400-450 kW).
Doch bisher sind alle Versuche, ein fokussiertes monochromatisches Röntgen- oder Gamma-Strahlenbündel zu erzeugen, an den Problemen mit den Monochromatoren und der (Spiegel- oder Linsen-)Fokussierung gescheitert. Die aufgezählten Schwierigkeiten im Blick wird hier nun eine Zusammensetzung und Vorrichtung zur Gewinnung monochromatischer Neutronenstrahlung vorgeschlagen, welche über dieselbe hohe Durchdringung verfügt, in beliebigen Medien praktisch nicht streut und keines grossen Energieaufwands zur Umsetzung des nuklearen Syntheseprozesses bedarf.

### BEISPIEL

Die Druckkammer (Gasostat) für Heliumdrücke von bis zu 2000 MPa wird aus hochfesten Titanlegierungen hergestellt.
1. Die Innenhülse der Druckkammer wird aus der Legierung MARagening 350 hergestellt.
2. Die Stempel des Druckübersetzers werden aus einer Rhenium-Legierung mit 5 % Wolfram (Re + 5 % W) durch Elektronenstrahlschmelze und Elektroerosion mit abschliessendem Schleifen an Schablonen und Kontraschablonen hergestellt.
3. Die Dichtungen zwischen den Stempeln des Druckübersetzers (Multiplikator) werden aus einem Pulver aus turbostratischem ¹¹B¹⁵N, welches in einer Gasdruckkammer mit 1,5 - 2,3 Gew.% He angereichert worden ist, hydrostatisch unter einem Druck von 500 - 600 MPa bis zu einer Dichte von 1,8 - 2,2 g/cm³ hergestellt.
4. Der Ausgangskanal im Stopfen der Druckkammer wird mit einem Strang aus einem Composite-Material verschlossen, bei dem es sich um ein Pulver aus turbostratischem ¹¹B¹⁵N mit 1,5 - 2,3 Gew.% He handelt, welches bis zu 18 Vol.% mit senkrecht zur Achse des Ausgangskanals ausgerichteten Nanodrähten aus Al¹⁵N bewehrt ist.
5. Zur Herstellung der aus zwei Halbkugeln bestehenden Hülle des Druckübersetzers wird ein Blech aus einer Zr-Legierung von 2 % Nb mit einer Dicke von 1,7 mm isothermisch heissverpresst und anschliessend elektrochemisch poliert.
6. Der Ausgangsstoff für die nukleare Synthese wird aus Amin-Boran gewonnen, wobei Bor in Form des Isotops ¹¹B verwendet wird, Stickstoff als ¹⁵N und Wasserstoff als Tritium mit der Formel ¹¹BT₃¹⁵NT₃; das Pulver wird in der Druckkammer unter einem Druck von 1700 MPa durch Deuterium bei einer Temperatur von 110 °C verdichtet. Anschliessend wird ein Belag aus metallischem Kalifornium im Verdampfungs-Kondensations-Verfahren bis zu einer Dicke von 125 µm aufgetragen.
7. Der mit dem nuklearen Ausgangsstoff versehene Druckübersetzer wird hermetisch in eine Hülle eingeschweisst, in die Druckkammer eingeführt und auf 10⁻⁶ Torr vakuumiert. Anschliessend wird in folgenden Schritten Helium eingepumpt:
   bis 100 MPa 30 min lang, bis 1000 MPa 45 min, bis 2000 MPa 60 min.
8. Der Detektor zur Bestimmung von Wellenlänge und Dichte des Neutronenflusses wird 1 m von der Austrittsöffhung des Monochromators entfernt aufgestellt:
   - die Vergrösserung des Flecks auf dem Papier zur Überwachung der Strahlung übersteigt 0,1 - 0,2 mm nicht,
   - die Teilchendichte schwankt während des Vorgangs in Intervallen von 10¹⁶ → 10¹⁴p/cm²,
   - die Dauer des Leuchtens von einem Kern beträgt nicht mehr als 1,5 - 1,6 min,
   - der "Abbrenn"koeffizient des Ausgangsstoffs beträgt bis zu 18 % vom Kernvolumen.

## Patentansprüche

1. Verfahren zur Gewinnung einer monochromatischer Neutronenstrahlung, die auf einen Monochromator und die weiter auf das bestrahlte Objekt fällt, **dadurch gekennzeichnet, dass** in einer als Gasostat ausgebildeten Druckkammer ein Druckübersetzer bzw. Gasmultiplikator vorgesehen ist, dass in diesen ein Ausgangsstoff eingebracht wird, dass der Druckübersetzer einem Druck von bis zu 2000 MPa ausgesetzt wird, wobei der Ausgangsstoff bis zum Einsetzen einer nukleare Synthesereaktion hoch verdichtet wird, und dass die dabei entstehende Neutronenstrahlung durch Dichtungen zwischen den Stempeln des Druckübersetzers und durch einen Ausgangskanal in einem Stopfen des Gasostaten auf den Monochromator fällt.

2. Verfahren nach Anspruch 1, **dadurch gekennzeichnet, dass** der Druckübersetzer mit einer ihn hennetisch abschliessenden Hülle versehen ist und dass diese den Druck in der Druckkammer auf die Stempel und die Dichtungen überträgt.

3. Verfahren nach Anspruch 2, **dadurch gekennzeichnet, dass** der Druck in der Druckkammer von Helium erzeugt wird.

4. Verfahren nach Anspruch einem der vorhergehenden Ansprüche, **dadurch gekennzeichnet, dass** der mit der Hülle versehene Druckübersetzer mit dem Ausgangsstoff in dem Gasostat auf 10⁻⁶ Torr vakuumiert wird und dass danach das Helium bis zum Erreichen von 2000 MPa wie folgt hineingepumpt wird: bis 100 MPa 30 min lang, danach bis 1000 MPa 45 min und schliesslich bis 2000 MPa 60 min.

5. Verfahren nach Anspruch 4, **dadurch gekennzeichnet, dass** die Hülle des Druckübersetzers aus zwei Halbkugeln besteht, die aus einem Blech aus einer Zr-Legierung von 2 % Nb mit einer Dicke von 1,7 mm isothermisch heissverpresst werden.

6. Verfahren nach einem der Anspruch 2, **dadurch gekennzeichnet, dass** die Stempel durch Elektronenstrahlschmelze aus einer Re-W-Legierung angefertigt sind.

7. Verfahren nach Anspruch 1 oder 2, **dadurch gekennzeichnet, dass** die Dichtungen zwischen den Stempeln des Drucküberstzers und dem Ausgangskanal im Stopfen des Gasostaten aus einem turbostratischen hexagonalen Pulver aus ¹¹B¹⁵N mit 1,5 - 2,3 Gew.% He und einer Dichte von minimal 1,8 - 2,2 g/cm³ hergestellt sind.

8. Verfahren nach Anspruch 7, **dadurch gekennzeichnet, dass** das Pulver hydrostatisch unter einem Druck von 500 - 600 MPa hergestellt ist.

9. Verfahren nach Anspruch 7, **dadurch gekennzeichnet, dass** der Ausgangskanal im Stopfen der Druckkammer mit einem Strang aus einem Pulver aus turbostratischem ¹¹B¹⁵N mit 1,5 - 2,3 Gew.% He verschlossen ist, welches bis zu 18 Vol.% mit Nanodrähten aus Al¹⁵N bewehrt ist.

10. Verfahren nach Anspruch 9, **dadurch gekennzeichnet, dass** die Nanodrähte zwecks Antiextrusion des Ausgangskanals senkrecht zu seiner Achse ausgerichtet und bei einem Druck von 2200 - 2500 MPa hydrostatisch verdichtet sind, und dass das Pulver in den Ausgangskanal des Stopfens durch Strangpressung unter einem Druck 300-350 kg/mm² eingepresst ist.

11. Verfahren nach einem der Ansprüche 1 bis 10, **dadurch gekennzeichnet, dass** Amin-Boran, in dem Bor in Form des Isotops ¹¹B, Stickstoff als ¹⁵N und Wasserstoff in seiner schwersten Form, als Tritium vorliegt, und dessen Formel ¹¹BT₃¹⁵NT₃ lautet, als Ausgangsstoff für die nukleare Synthese, werwendet wird.

12. Verfahren nach Anspruch 11, **dadurch gekennzeichnet, dass** der Ausgangsstoff als Synthesekern aus Amin-Boran in der Druckkammer unter dem Druck von Deuterium bei 1500 - 2000 MPa und einer Temperatur von bis zu 110 °C verdichtet wird, im Verdampfungs-Kondensations-Verfahren mit einer Schicht bis zu einer Dicke von 100 - 150 um bei einem Durclumesser von 5 - 7 mm aus metallischem Kalifornium bedeckt wird.

13. Verfahren nach Anspruch 12 als Synthesekern, **dadurch gekennzeichnet, dass** der Synthesekern in dem Druckübersetzer angeordnet wird und dass dieser in die ihn hermetisch abschliessende Hülle eingeschweisst ist.

## Claims

1. A method for obtaining a monochromatic neutron radiation that reaches a monochromator and also reaches the irradiated object, **characterised in that** a pressure booster or gas multiplier is provided in a pressure chamber formed as a gasostat, **in that** a starting material is introduced into said pressure booster or gas multiplier, **in that** the pressure booster is exposed to a pressure of up to 2000 MPa, wherein the starting material is heavily compressed until the onset of a nuclear synthesis reaction, and **in that** the resultant neutron radiation reaches the monochromator through gaskets between the punches of the pressure booster and through an outlet channel in a plug of the gasostat.

2. The method according to Claim 1, **characterised in that** the pressure booster is provided with a sleeve hermetically closing off said pressure booster, and **in that** this sleeve transfers the pressure in the pressure chamber to the punches and the gaskets.

3. The method according to Claim 2, **characterised in that** the pressure in the pressure chamber is generated by helium.

4. The method according to any one of the preceding claims, **characterised in that** the pressure booster provided with the sleeve is vacuumed to 10⁻⁶ Torr with the starting material in the gasostat, and **in that** the helium is then pumped in as follows until a pressure of 2000 MPa is reached: up to 100 MPa for 30 min long, then up to 1000 MPa for 45 min, and lastly up to 2000 MPa for 60 min.

5. The method according to Claim 4, **characterised in that** the sleeve of the pressure booster consists of two half-shells, which are isothermically hot-pressed from a sheet metal formed from a Zr alloy of 2 % Nb with a thickness of 1.7 mm.

6. The method according to Claim 2, **characterised in that** the punches are produced by electron beam melts from an Re-W alloy.

7. The method according to Claim 1 or 2, **characterised in that** the gaskets between the punches of the pressure booster and the outlet channel in the plug of the gasostat are produced from a turbostratic hexagonal powder formed from ¹¹B¹⁵N with 1.5-2.3 % by weight He and a density of at least 1.8-2.2 g/cm³.

8. The method according to Claim 7, **characterised in that** the powder is produced hydrostatically at a pressure of 500-600 MPa.

9. The method according to Claim 7, **characterised in that** the outlet channel in the plug of the pressure chamber is closed with an extrudate formed from a powder consisting of turbostratic ¹¹B¹⁵N with 1.5-2.3 % by weight He, which is reinforced up to 18 vol. % with nanowires formed from Al¹⁵N.

10. The method according to Claim 9, **characterised in that** the nanowires, for the purpose of antiextrusion of the outlet channel, are oriented perpendicularly to the axis thereof and are hydrostatically compressed at a pressure of 2200-2500 MPa, and **in that** the powder is pressed into the outlet channel of the plug by extrusion under a pressure of 300-350 kg/mm².

11. The method according to one of Claims 1 to 10, **characterised in that** amine-borane, in which boron is present in the form of the ¹¹B isotope, nitrogen is present as ¹⁵N, and hydrogen is present in its heaviest form, as tritium, and of which the formula is ¹¹BT₃¹⁵NT₃, is used as starting material for the nuclear synthesis.

12. The method according to Claim 11, **characterised in that** the starting material, as synthesis core formed from amine-borane, is compressed in the pressure chamber at the pressure of deuterium at 1500-2000 MPa and a temperature of up to 110°C, and is covered in an evaporation-condensation process by a layer up to 100-150 µm thick at a diameter of 5-7 mm formed from metal californium.

13. The method according to Claim 12 as synthesis core, **characterised in that** the synthesis core is arranged in the pressure booster, and **in that** said synthesis core is welded into the sleeve hermetically closing off said pressure booster.

## Revendications

1. Dispositif de production d'un rayonnement neutronique monochromatique, qui tombe sur un monochromateur et puis sur l'objet irradié, **caractérisé en ce qu'**un multiplicateur de pression ou multiplicateur dans le gaz est prévu dans une chambre de pression constituée comme gazostat, **en ce que** dans celui-ci une substance de départ est introduite, **en ce que** le multiplicateur de pression est exposé à une pression allant jusqu'à 2000 MPa, la substance de départ étant fortement comprimée jusqu'au déclenchement d'une réaction de synthèse nucléaire et **en ce que** le rayonnement neutronique se produisant à cet effet s'étend sur le monochromateur à travers les joints entre les pistons du multiplicateur de pression et à travers un conduit de sortie dans un bouchon du gazostat.

2. Méthode selon la revendication 1 **caractérisée en ce que** le multiplicateur de pression est doté d'une gaine le fermant hermétiquement et **en ce que** celle-ci transmet la pression dans la chambre de pression aux pistons et aux joints.

3. Méthode selon la revendication 2 **caractérisée en ce que** la pression dans la chambre de pression est produite par de l'hélium.

4. Méthode selon l'une quelconque des revendications précédentes **caractérisée en ce que** le multiplicateur de pression doté de la gaine est mis sous vide avec la substance de départ dans le gazostat à 10⁻⁶ Torr et **en ce qu'**ensuite l'hélium est pompé à l'intérieur jusqu'à atteindre 2 000 MPa, comme suit : jusqu'à 100 MPa pendant 30 minutes, ensuite jusqu'à 1 000 MPa 45 minutes et finalement jusqu'à 2 000 MPa 60 minutes.

5. Méthode selon la revendication 4 **caractérisée en ce que** la gaine du multiplicateur de pression est composée dé deux hémisphères qui sont pressées à chaud de manière isothermique à partir d'une tôle en alliage Zr de 2 % Nb d'une épaisseur de 1,7 mm.

6. Méthode selon la revendication 2 **caractérisée en ce que** les pistons sont fabriqués par fusion par bombardement électronique à partir d'un alliage Re-W.

7. Méthode selon la revendication 1 ou 2 **caractérisée en ce que** les joints entre les pistons du multiplicateur de pression et le conduit de sortie dans le bouchon du gazostat sont fabriqués à partir d'une poudre hexagonale turbostratique de ¹¹B¹⁵N avec 1,5 - 2,3 %/poids He et d'une densité minimale de 1,8 - 2,2 g/cm3.

8. Méthode selon la revendication 7 **caractérisée en ce que** la poudre est fabriquée de manière hydrostatique à une pression de 500 - 600 MPa.

9. Méthode selon la revendication 7 **caractérisée en ce que** le conduit de sortie dans le bouchon de la chambre de pression est fermé avec un cordon d'une poudre en ¹¹B¹⁵N turbostratique avec 1, 5 - 2,3 %/poids He, qui est armée jusqu'à 18% vol. avec des nanofils en Al¹⁵N.

10. Méthode selon la revendication 9 **caractérisée en ce que** les nanofils sont orientés à des fins d'anti-extrusion du conduit de sortie, perpendiculairement à son axe et sont comprimés de manière hydrostatique à une pression de 2 200 - 2 500 MPa et **en ce que** la poudre est comprimée dans le conduit dé sortie du bouchon par pression d'extrusion à une pression de 300 - 350 kg/mm².

11. Méthode selon l'une quelconque des revendications 1 à 10 **caractérisée en ce que** de l'amine-borane est utilisé comme substance de départ pour la synthèse nucléaire, dans lequel du bore est présent sous la forme de l'isotope ¹¹B, de l'azote sous la forme ¹⁵N et de l'hydrogène sous sa forme la plus lourde en tant que tritium et dont la formule est ¹¹BT₃¹⁵NT₃.

12. Méthode selon la revendication 11 **caractérisée en ce que** la substance de départ est comprimée en tant que noyau synthétique d'amine-borane dans la chambre de pression à une pression de deutérium à 1 500 - 2 000 MPa et une température allant jusqu'à 110° C, et est recouverte dans un procédé d'évaporation-condensation d'une couche en californium métallique allant jusqu'à une épaisseur de 100 - 150 µm pour un diamètre de 5 - 7 mm.

13. Méthode selon la revendication 12 en tant que noyau synthétique, **caractérisée en ce que** le noyau synthétique est disposé dans le multiplicateur de pression et **en ce que** celui-ci est soudé dans la gaine le fermant hermétiquement.
